# EUROPÄISCHE PATENTSCHRIFT

(11) **EP 2 988 976 B1**
(45) Veröffentlichungstag und Bekanntmachung des Hinweises auf die Patenterteilung: **10.03.2021**
(21) Anmeldenummer: 14718564.9
(22) Anmeldetag: 15.04.2014
(51) Int. Cl.: B60R 21/239

(54) **GASAUSLASSVENTIL FÜR EINEN KRAFTFAHRZEUGAIRBAG UND KRAFTFAHRZEUGAIRBAG MIT EINEM DERARTIGEN GASAUSLASSVENTIL**
GAS OUTLET VALVE FOR A MOTOR VEHICLE AIRBAG AND MOTOR VEHICLE AIRBAG HAVING SUCH A GAS OUTLET VALVE
SOUPAPE D'ÉCHAPPEMENT DE GAZ POUR COUSSIN DE SÉCURITÉ GONFLABLE DE VÉHICULE AUTOMOBILE ET COUSSIN DE SÉCURITÉ GONFLABLE DE VÉHICULE AUTOMOBILE POURVU D'UNE SOUPAPE D'ÉCHAPPEMENT DE GAZ DE CE TYPE

(30) Priorität: 22.04.2013 DE 102013207273
(43) Veröffentlichungstag der Anmeldung: 02.03.2016
(73) Patentinhaber: Bayerische Motoren Werke Aktiengesellschaft, 80809 München (DE)
(72) Erfinder: KOESTLER, Ulrich, 85241 Hebertshausen (DE); MEIERHOFER, Walter, 94099 Schmidham (DE); SPRINGSKLEE, Markus, 80638 Muenchen (DE); IVENZ, Udo, 86456 Gablingen (DE)
(86) Internationale Anmeldenummer: PCT/EP2014/057664
(87) Internationale Veröffentlichungsnummer: WO 2014/173740

(56) Entgegenhaltungen:
- WO-A1-2009/078212
- DE-A1-102006 031 542
- DE-A1-102006 044 707
- US-A1- 2004 012 179
- US-A1- 2008 079 250
- US-A1- 2012 068 444
- US-A1- 2012 074 677
- US-A1- 2013 069 352

## Beschreibung

Die vorliegende Erfindung betrifft einen Kraftfahrzeugairbag mit einem Gasauslassventil.

Es ist bekannt, an einem Fahrzeugairbag ein Gasauslassventil bzw. Entlüftungsventil anzuordnen, das sich öffnet oder aktiv geöffnet wird, wenn eine Person auf den Airbag trifft, um eine Rückprallwirkung des Airbags zu verringern und einen zu hohen Druck in dem Airbag bei dem Aufprall der Person zu verhindern.

Beispielsweise ist in der Offenlegungsschrift DE 102006044707 A1 eine Airbagentlüftung gezeigt, bei der eine Stoffbahn des aufblasbaren Airbags eine Entlüftungsöffnung aufweist, die mit einem Ventilblatt verschlossen ist, das relativ zu der Entlüftungsöffnung bewegbar ist. Insbesondere ist das Ventilblatt mittels einer taschenartigen Ventilführung, die auf die Stoffbahn genäht ist, geführt. Sowohl in dem Ventilblatt als auch in der Ventilführung sind Öffnungen ausgebildet. Im Falle einer gewünschten Entlüftung des Airbags wird nun das Ventilblatt innerhalb der Ventilführung so weit verschoben, bis die Entlüftungsöffnung in der Stoffbahn und die Entlüftungsöffnung in dem Ventilblatt deckungsgleich sind und damit Gas aus dem Airbag entweichen kann.

Ferner zeigt die DE 10 2006 031 542 A1 einen Airbag mit einer verschließbaren Gasauslassöffnung Ein weiterer Kraftfahrzeugairbag, der dem Oberbegriff des Anspruchs 1 entspricht, ist aus der US 2012/0074677 A1 bekannt geworden.

Es ist die Aufgabe der Erfindung, einen Kraftfahrzeugairbag mit einem Gasauslassventil zu schaffen, wobei das Gasauslassventil derart ausgestattet ist, dass der Airbag schneller entlüftet werden kann.

Diese Aufgabe wird durch einen Kraftfahrzeugairbag mit einem Gasauslassventil gelöst, der die Merkmale von Patentanspruch 1 aufweist. Bevorzugte Weiterbildungen sind in den abhängigen Patentansprüchen aufgeführt.

Ein Fahrzeugairbag mit einem Gasauslassventil gemäß der vorliegenden Erfindung hat eine Airbaglage, in der zumindest eine Entlüftungsöffnung ausgebildet ist, ein Ventilblatt, das die Entlüftungsöffnung verschließt und eine Ventilblattführung, die das Ventilblatt an den Rändern des Ventilblatts überlappt und in der Mitte eine Führungsöffnung aufweist. Das Ventilblatt ist aus einem flexiblen Material, wie beispielsweise einem Stoff, insbesondere einem Gewebe, ausgebildet und ist ferner derart über der Entlüftungsöffnung angeordnet, dass es parallel zu der Airbaglage in eine vorgegebene Richtung verschiebbar ist. Eine Überlappung in die vorgegebene Richtung von der Ventilblattführung und dem Ventilblatt ist derart ausgebildet und die Entlüftungsöffnung ist derart angeordnet, dass das Ventilblatt bereits nach einem kurzen Verschiebeweg aufgrund eines Gasdrucks im Inneren des Airbags durch die Führungsöffnung nach außen drückbar ist und die Entlüftungsöffnung hierdurch freigegeben wird.

Die Entlüftungsöffnung liegt der Führungsöffnung gegenüber. Die Führungsöffnung und die Entlüftungsöffnung sind damit Bestandteil eines Gasdurchganges bei dem geöffneten Gasauslassventil.

Durch den kurzen Verschiebeweg und die geeignete Anordnung der Entlüftungsöffnung kann damit eine schnelle Entlüftung des Airbags durch ein schnelles Entfernen des Ventilblattes von der Entlüftungsöffnung bzw. ein schnelles Außer-Eingriff-Bringen von Ventilblatt und Ventilblattführung unterstützt durch den Gasdruck herbeigeführt werden.

Erfindungsgemäss ist das Gasauslassventil dabei derart ausgestaltet, dass eine in die vorgegebene Richtung seitliche Führungsöffnungskante derart schräg zu der vorgegebenen Richtung verläuft, dass eine Verschiebung des Ventilblatts eine Überlappung mit der seitlichen Führungsöffnungskante nach dem kurzen Verschiebeweg aufhebt.

Durch die schräge Anordnung der seitlichen Führungsöffnungskante, also einer seitlichen Kante der Führungsöffnung, ist es möglich, dass eine Überlappung des Ventilblatts mit der Ventilblattführung im Bereich der seitlichen Führungsöffnungskante schon nach einem kurzen Verschiebeweg nicht mehr vorhanden ist und Gas zwischen der seitlichen Führungsöffnungskante und dem Ventilblatt ausströmen kann und damit das Ventilblatt, das aus einem flexiblem Material ausgebildet ist, durch das Ausströmen des Gases nach außen gedrückt wird und damit auch eine Überlappung an anderen Bereichen zwischen dem Ventilblatt und der Ventilblattführung aufgehoben wird.

Bevorzugt ist ein seitlicher Rand des Ventilblattes im Wesentlichen um einen Überlappungsbetrag in die vorgegebene Richtung versetzt parallel zur seitlichen Führungsöffnungskante verlaufend ausgebildet.

Damit erfolgt die Öffnung bereits bei Verschiebung des Ventilblatts um den Überlappungsbetrag oder möglicherweise, je nach Anordnung der Entlüftungsöffnung, dem Innendruck und der Flexibilität des Ventilblattes, bereits schon nach einer kürzeren Verschiebestrecke als der Länge des Überlappungsbetrags in die vorgegebene Richtung.

Des Weiteren verläuft bei dem Gasauslassventil mit der seitlichen schrägen Führungsöffnungskante eine in die vordere Richtung vordere Führungsöffnungskante der Führungsöffnung im Wesentlichen quer zu der vorgegebenen Richtung. Quer kann dabei bedeuten, dass die vordere Führungsöffnungskante im Wesentlichen in einem rechten Winkel zu der vorgegebenen Richtung verläuft.

Gemäß einer bevorzugten Weiterbildung des Gasauslassventils mit der schrägen seitlichen Führungsöffnungskante hat das Gasauslassventil ferner eine andere seitliche Führungsöffnungskante, die im Wesentlichen spiegelsymmetrisch zu der seitlichen Führungsöffnungskante ausgebildet ist. Die Spiegelsymmetrielinie läuft dabei bevorzugt parallel zu der vorgegebenen Richtung.

Hierdurch kann, wenn das Ventilblatt dementsprechend spiegelsymmetrisch ausgebildet ist und sich mit den beiden schrägen seitlichen Führungsöffnungskanten um einen gleichen Überlappungsbetrag überlappt, ein schnelles Außer-Eingriff-Bringen des Ventilblattes von der Ventilblattführung verbessert erfolgen. Die Entlüftungsöffnung wird damit besonders schnell geöffnet.

Die Entlüftungsöffnung ist dabei bevorzugt im Bereich eines in Verschieberichtung hinteren Endes der seitlichen Führungsöffnungskante ausgebildet.

Durch die Ausbildung der Entlüftungsöffnung im Bereich der seitlichen Führungsöffnungskante wird ein Außer-Eingriff-Bringen des Ventilblattes und der Ventilblattführung in dem benachbarten Überlappungsbereichen verbessert unterstützt.

Bevorzugt ist bei dem Gasauslassventil die Führungsöffnung in Form eines gleichschenkligen Dreiecks oder eines gleichseitigen Trapezes ausgebildet. Dementsprechend kann auch das Ventilblatt in Form eines gleichschenkligen Dreiecks oder eines gleichseitigen Trapezes ausgebildet sein, wobei das Ventilblatt bedingt durch die Überlappung jeweils größer als die Führungsöffnung ausgebildet ist.

Durch diese geometrische Ausbildung der Führungsöffnung und des Ventilblattes kann das Ziel eines schnellen Öffnens bzw. Entlüftens des Airbags nach einem kurzen Verschiebeweg durch Außer-Eingriff-Bringen von Ventilblatt und Ventilblattführung besonders einfach erhalten werden.

Bevorzugt ist im Falle, dass das Ventilblatt in Form eines Trapezes ausgebildet ist und gegenüber der trapezförmigen Führungsöffnung der Ventilblattführung verschiebbar ist, an der kurzen Seite des Trapezes des Ventilblattes eine Verlängerungslasche ausgebildet, wobei die Verlängerungslasche in der Ventilblattführung geführt ist.

Damit ist im geschlossenen Zustand des Gasauslassventils, d.h. im nicht verschobenen Zustand des Ventilblattes sicher gestellt, dass das Ventilblatt an der kurzen Seite des Trapezes nicht außer Eingriff mit der Ventilblattführung kommt und damit der Airbag ungewollt entlüftet wird.

Bevorzugt ist die Entlüftungsöffnung nahe einer Führungsöffnungskante und damit nahe einer Überlappung, ausgebildet. Es können auch mehrere Entlüftungsöffnungen ausgebildet sein, die ebenso nahe der Führungsöffnungskanten der Führungsöffnung angeordnet sein können.

Bevorzugt ist im Bereich einer Mitte der Führungsöffnung keine Entlüftungsöffnung ausgebildet.

Hierdurch wird sichergestellt, dass das Ventilblatt im geschlossenen Zustand der Entlüftungsöffnung, d.h. im nicht verschobenen Zustand des Ventilblattes aufgrund seiner Flexibilität nicht von der Ventilblattführung außer Eingriff kommt und durch die Führungsöffnung hindurch nach außen gedrückt wird, ohne dass das Ventilblatt aktiv verschoben wird.

Bevorzugt ist bei dem Gasauslassventil das Ventilblatt an seinem in die vorgegebene Richtung vorderen Ende an der Airbaglage fixiert, vorteilhaft angenäht. Hierdurch wird das Ventilblatt bei dem Öffnen des Gasauslassventils nicht unkontrolliert separiert. Ferner stellt die Fixierung eine korrekte Lage bei einem Montieren des Ventilblattes sicher. Darüber hinaus ist hierdurch eine ungewollte Öffnung des Gasauslassventils erschwert.

Die Ventilblattführung ist ferner bevorzugt in Form einer aufgesetzten Tasche ausgebildet, die an die Airbaglage genäht sein kann. In einer Mitte der Tasche ist dabei für den Gasauslass die Führungsöffnung ausgebildet.

Der erfindungsgemässe Kraftfahrzeugairbag mit Gasauslassventil ist besonders für einen Frontscheibenairbag geeignet, der sich insbesondere im aufgeblasenen Zustand zum Schutz eines Nichtinsassen bei Kollision des Nichtinsassen mit dem Kraftfahrzeug über eine Außenseite einer Frontscheibe erstreckt, weil bei einem Frontscheibenairbag ein besonders schnelles Öffnen des Gasauslassventils erforderlich ist.

Vorstehend aufgeführte Weiterbildungen der Erfindung können, soweit möglich, geeignet miteinander kombiniert werden.

Kurzbeschreibung der Figuren:
- Fig. 1: ist eine schematische Seitenansicht eines Fahrzeugairbags gemäß einem Ausführungsbeispiel der vorliegenden Erfindung.
- Fig. 2: ist eine schematische Draufsicht auf ein Gasauslassventil des Fahrzeugairbags gemäß dem Ausführungsbeispiel der vorliegenden Erfindung.
- Fig. 3: ist eine schematische Schnittansicht des Gasauslassventils entlang der Linie A-A in Fig. 2 gemäß dem Ausführungsbeispiel der vorliegenden Erfindung.
- Fig. 4: ist eine schematische Schnittansicht des Gasauslassventils entlang der Linie B-B in Fig. 2 gemäß dem Ausführungsbeispiel der vorliegenden Erfindung.

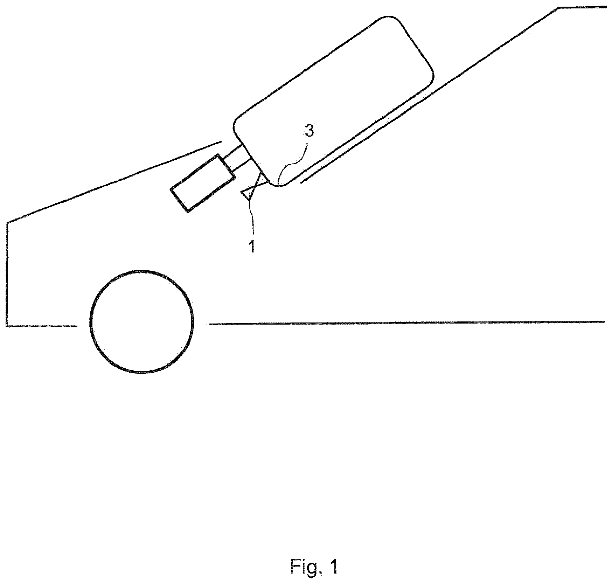

Nachstehend erfolgt eine detaillierte Beschreibung eines Ausführungsbeispiels der vorliegenden Erfindung unter Bezugnahme auf Figuren 1 bis 4.

Figur 1 zeigt einen Kraftfahrzeugairbag, insbesondere einen Frontscheibenairbag, der zumindest eine Airbaglage 3 aufweist, die eine Airbagaussenhaut bildet und aus einem geeigneten Airbaggewebe oder Airbagstoff ausgebildet ist. Der Kraftfahrzeugairbag ist in einem aufgeblasenen Zustand gezeigt, in dem er sich zumindest über einen unteren Bereich einer Frontscheibe eines Kraftfahrzeugs erstreckt. Der Fahrzeugairbag hat ein Gasauslassventil 1, das geöffnet wird, wenn eine Person auf den Fahrzeugairbag trifft und/oder bevor eine Person auf den Fahrzeugairbag trifft, um einen Rückpralleffekt zu verhindern oder zumindest zu vermindern.

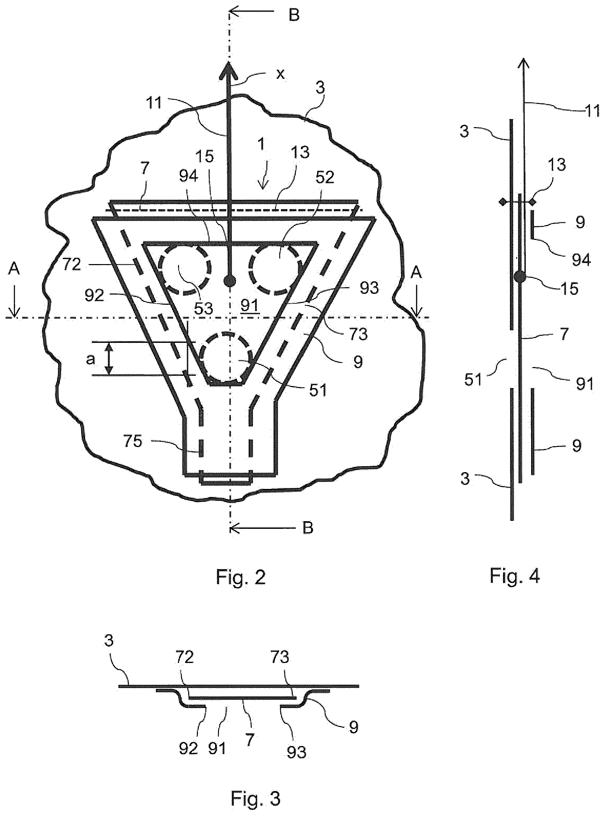

Das Gasauslassventil 1 ist in Figur 2 in einer schematischen Draufsicht gezeigt. In der Airbaglage 3 sind gemäß dem Ausführungsbeispiel drei kreisförmige Entlüftungsöffnungen 51, 52, 53 ausgebildet, durch die Gas vom Inneren des Airbags nach außen ausströmen kann. Über den Entlüftungsöffnungen 51, 52, 53 ist ein Ventilblatt 7 angeordnet, das sich parallel zu der Airbaglage 3 erstreckt und die Entlüftungsöffnungen 51, 52, 53 abdeckt und damit verschließt. Das Ventilblatt 7 ist in einer Tasche 9 gehalten, die eine Ventilblattführung gemäß der vorliegenden Erfindung bildet. Das Ventilblatt 7 ist teilweise von der Tasche 9 verdeckt und ist daher an seinen von der Tasche 9 verdeckten Endkanten mit einer gestrichelten Linie in Fig. 2 dargestellt. Die Tasche 7 ist an zwei entgegengesetzten seitlichen äußeren Rändern an die Airbaglage 3 genäht. Die Tasche 9 hat in der Mitte ferner eine trapezförmige Taschenöffnung 91. Das Ventilblatt 7 ist verschiebbar zwischen der Tasche 9 und der Airbaglage 3 angeordnet. Seitliche Ränder des Ventilblattes 7 überlappen sich mit entsprechenden seitlichen Rändern der Tasche 7, wie insbesondere auch aus den Schnittansichten von Figuren 3 und 4 hervorgeht.

Die Taschenöffnung 91 weist symmetrisch angeordnet eine linke seitliche Öffnungskante 92 und eine rechte seitliche Öffnungskante 93 auf, die schräg zu einer Verschieberichtung x des Ventilblatts verlaufen. Ferner weist die Taschenöffnung 91 eine vordere Öffnungskante 94 auf. Die Taschenöffnung 91 ist im Wesentlichen trapezförmig ausgestaltet, kann aber auch in Form eines Dreiecks, insbesondere eines gleichschenkligen Dreiecks ausgebildet sein. Das Ventilblatt 7 ist analog der Taschenöffnung 91 trapezförmig ausgebildet, ist jedoch größer als die Taschenöffnung 91, so dass sich die Ränder der Tasche 9 und das Ventilblatt 7 überlappen. Ferner weist das Ventilblatt 7 an seiner kurzen Trapezseite eine Lasche 75 auf, die in einem der Tasche 9 entsprechenden Abschnitt geführt ist. An seiner langen Trapezseite ist das Ventilblatt 7 über eine Naht 13 an der Airbaglage 3 fixiert. Das Ventilblatt 7 ist also an einer Seite an der Airbaglage 3 fixiert, insbesondere an der in Bezug auf die vorgegebene Richtung vorderen Seite.

Die Entlüftungsöffnungen 51, 52, 53 sind in der Airbaglage 3 gegenüberliegend von Randbereichen der Taschenöffnung 91 ausgebildet. Gegenüberliegend einem mittleren Bereich der Taschenöffnung 91 ist keine Entlüftungsöffnung ausgebildet.

Darüber hinaus ist an dem Ventilblatt 7 mittig an einer Position 15 und entfernt von der Naht 13 ein Zugelement 11 befestigt, mittels dem das Ventilblatt 7 in die Richtung x, die die vorgegebene Richtung gemäß der vorliegenden Erfindung ist, gezogen werden kann.

Das Ventilblatt 7 ist aus einem flexiblen Material ausgebildet. Bevorzugt ist das Ventilblatt 7 aus einem Airbaggewebe ausgebildet. Auch die Tasche 9 kann aus einem Airbaggewebe wie das Ventilblatt 7 und die Airbaglage 3 ausgebildet sein.

Nachstehend ist eine Funktion des Gasauslassventils 1 gemäß dem Ausführungsbeispiel der vorliegenden Erfindung erläutert.

Der in Figur 1 gezeigte Frontscheibenairbag wird über das Gasauslassventil 1 entlüftet, sobald eine Person auf den Frontscheibenairbag auftrifft oder angenommen wird, dass eine Person auf den Frontscheibenairbag treffen wird. Hierdurch kann eine Rückprallwirkung des Frontscheibenairbag verhindert werden.

Beim Öffnen des Gasauslassventils 1 zieht eine geeignete Einrichtung über das Zugelement 11 an dem Ventilblatt 7 in die vorgegebene Richtung x. Der Frontscheibenairbag ist mit Gas befüllt und steht unter einem bestimmten Druck. Sobald das Ventilblatt 7 um einen Überlappungsbetrag a in die Richtung x verschoben ist, kommt das Ventilblatt 7 an seinen seitlichen linken und rechten Rändern Außer-Eingriff gegenüber der Tasche 9. Insbesondere überlappt es nach dem Verschieben um den Betrag a in dem seitlichen Bereich nicht mehr mit der Tasche 9. Dadurch kann der Gasdruck, der an dem Ventilblatt 7 über die Führungsöffnungen 51, 52, 53 anliegt dafür sorgen, dass das flexible Ventilblatt 7 durch die Taschenöffnung 91 nach außen gedrückt wird und die Entlüftungsöffnungen 51, 52, 53 vollständig freigeben werden. Das Ventilblatt 7 klappt dabei um die Öffnungskante 94 um, da es an seinem vorderen Ende über die Naht 13 mit der Airbaglage 3 vernäht ist. Dabei wird dann auch die Lasche 75 aus der entsprechenden Führung der Tasche 9 gezogen. Hierdurch kann also über einen verhältnismäßig kurzen Verschiebeweg in die vorgegebene Richtung x, der höchstens dem Überlappungsbetrag a entspricht und je nach Flexibilität des Ventilblattes 7 auch kürzer als der Überlappungsbetrag a sein kann, das Gasauslassventil 1 geöffnet werden. Der Überlappungsbetrag a wiederum ist abhängig von einem Winkel der Seitenränder der Taschenöffnung 91 gegenüber der vorgegebenen Richtung und von einem Überlappungsgrad des Ventilblattes 7 mit der Tasche 9.

## Patentansprüche

1. Kraftfahrzeugairbag mit einem Gasauslassventil (1) und einer Airbaglage (3), in der zumindest eine Entlüftungsöffnung (51, 52, 53) ausgebildet ist, einem Ventilblatt (7), das die Entlüftungsöffnung (51, 52, 53) verschließt, das aus einem flexiblen Material ausgebildet ist und das über der Entlüftungsöffnung (51, 52, 53) parallel zu der Airbaglage (3) in eine vorgegebene Richtung (x) verschiebbar angeordnet ist, sowie einer Ventilblattführung (9), die das Ventilblatt (7) an den Rändern des Ventilblatts (7) überlappt und in der Mitte eine Führungsöffnung (91) aufweist, wobei eine Überlappung (a) in vorgegebene Richtung (x) der Ventilblattführung (9) und des Ventilblattes (7) derart ausgebildet ist und die Entlüftungsöffnung (51, 52, 53) derart angeordnet ist, dass das Ventilblatt (7) bereits nach einem kurzen Verschiebeweg aufgrund eines Gasdrucks im Inneren des Fahrzeugairbags durch die Führungsöffnung (91) nach außen drückbar ist und die Entlüftungsöffnung (51, 52, 53) hierdurch freigeben wird, **dadurch gekennzeichnet, dass**
zumindest eine in die vorgegebene Richtung (x) seitliche Führungsöffnungskante (92, 93) derart schräg zu der vorgegebenen Richtung (x) verläuft, dass eine Verschiebung des Ventilblatts (7) eine Überlappung mit der seitlichen Führungsöffnungskante (92, 93) nach dem kurzen Verschiebeweg aufhebt.

2. Kraftfahrzeugairbag nach Patentanspruch 1, wobei ein seitlicher Rand (72, 73) des Ventilblattes (7) im Wesentlichen um einen Überlappungsbetrag (a) in die vorgegebene Richtung (x) versetzt parallel zu der seitlichen Führungsöffnungskante (92, 93) verläuft.

3. Kraftfahrzeugairbag nach Patentanspruch 1 oder 2, wobei eine in die vorgegebene Richtung (x) vordere Führungsöffnungskante (94) der Führungsöffnung (91) im Wesentlichen quer zu der vorgegebenen Richtung (x) verläuft.

4. Kraftfahrzeugairbag nach einem der Patentansprüche 1 bis 3, wobei eine andere seitliche Führungsöffnungskante (93) im Wesentlichen spiegelsymmetrisch zu der seitlichen Führungsöffnungskante (92) ausgebildet ist und die Spiegelsymmetrielinie in die vorgegebene Richtung (x) verläuft.

5. Kraftfahrzeugairbag nach einem der Patentansprüche 1 bis 4, wobei die Entlüftungsöffnung (51, 52, 53) im Bereich eines in die vorgegebene Richtung (x) hinteren Endes der seitlichen Führungsöffnungskante (92, 93) ausgebildet ist.

6. Kraftfahrzeugairbag nach einem der Patentansprüche 1 bis 5, wobei die Führungsöffnung (91) in Form eines gleichschenkligen Dreiecks oder eines gleichseitigen Trapezes ausgebildet ist.

7. Kraftfahrzeugairbag nach Patentanspruch 6, wobei das Ventilblatt (7) in Form eines Trapezes ausgebildet ist und an der kurzen Seite des Trapezes eine Verlängerungslasche (75) ausgebildet ist und in der Ventilblattführung (9) geführt ist.

8. Kraftfahrzeugairbag nach einem der Patentansprüche 1 bis 7, wobei die Entlüftungsöffnung (51, 52, 53) nahe einer Führungsöffnungskante (92, 93, 94) ausgebildet ist, und insbesondere mehrere Entlüftungsöffnungen ausgebildet sind, die nahe Führungsöffnungskanten (92, 93, 94) und außerhalb einer Mitte der Führungsöffnung (91) ausgebildet sind.

9. Kraftfahrzeugairbag nach einem der Patentansprüche 1 bis 8, wobei das Ventilblatt (7) an seinem in die vorgegebene Richtung (x) vorderen Ende an der Airbaglage (3) fixiert, insbesondere angenäht, ist.

10. Kraftfahrzeugairbag nach einem der Patentansprüche 1 bis 9, wobei die Ventilblattführung (9) als aufgesetzte Tasche ausgebildet ist, die insbesondere auf die Airbaglage (3) genäht ist.

11. Kraftfahrzeugairbag nach einem der Patentansprüche 1 bis 10, wobei der Kraftfahrzeugairbag ein Frontscheibenairbag ist, der sich im aufgeblasenen Zustand über eine Außenseite einer Frontscheibe erstreckt.

## Claims

1. Motor vehicle airbag with a gas outlet valve (1) and an airbag layer (3), in which at least one ventilating opening (51, 52, 53) is configured, with a valve patch (7) which closes the ventilating opening (51, 52, 53), is configured from a flexible material, and is arranged over the ventilating opening (51, 52, 53) parallel to the airbag layer (3) such that it can be displaced in a predetermined direction (x), and with a valve patch guide (9) which overlaps the valve patch (7) at the edges of the valve patch (7) and has a guide opening (91) in the centre, an overlap (a) being configured in the predetermined direction (x) of the valve patch guide (9) and the valve patch (7) in such a way, and the ventilating opening (51, 52, 53) being arranged in such a way, that, after only a short displacement travel, the valve patch (7) can be pressed through the guide opening (91) to the outside on account of a gas pressure in the interior of the vehicle airbag, and the ventilating opening (51, 52, 53) is released as a result, **characterized in that** at least one guide opening edge (92, 93) which is lateral in the predetermined direction (x) runs obliquely with respect to the predetermined direction (x) in such a way that a displacement of the valve patch (7) eliminates an overlap with the lateral guide opening edge (92, 93) after the short displacement travel.

2. Motor vehicle airbag according to Patent Claim 1, a lateral edge (72, 73) of the valve patch (7) running parallel to the lateral guide opening edge (92, 93) such that it is offset substantially by an overlap amount (a) in the predetermined direction (x).

3. Motor vehicle airbag according to Patent Claim 1 or 2, a front (in the predetermined direction (x)) guide opening edge (94) of the guide opening (91) running substantially transversely with respect to the predetermined direction (x).

4. Motor vehicle airbag according to one of Patent Claims 1 to 3, another lateral guide opening edge (93) being of substantially mirror-symmetrical configuration with respect to the lateral guide opening edge (92), and the line of mirror symmetry running in the predetermined direction (x).

5. Motor vehicle airbag according to one of Patent Claims 1 to 4, the ventilating opening (51, 52, 53) being configured in the region of a rear (in the predetermined direction (x)) end of the lateral guide opening edge (92, 93) .

6. Motor vehicle airbag according to one of Patent Claims 1 to 5, the guide opening (91) being configured in the form of an isosceles triangle or an equilateral trapezoid.

7. Motor vehicle airbag according to Patent Claim 6, the valve patch (7) being configured in the form of a trapezoid, and an extension tab (75) being configured on the short side of the trapezoid and being guided in the valve patch guide (9).

8. Motor vehicle airbag according to one of Patent Claims 1 to 7, the ventilating opening (51, 52, 53) being configured close to a guide opening edge (92, 93, 94), and, in particular, a plurality of ventilating openings being configured which are configured close to guide opening edges (92, 93, 94) and outside a centre of the guide opening (91).

9. Motor vehicle airbag according to one of Patent Claims 1 to 8, the valve patch (7) being fixed, in particular sewn, at its front (in the predetermined direction (x)) end, to the airbag layer (3).

10. Motor vehicle airbag according to one of Patent Claims 1 to 9, the valve patch opening (9) being configured as a deposited pocket which, in particular, is sewn onto the airbag layer (3).

11. Motor vehicle airbag according to one of Patent Claims 1 to 10, the motor vehicle airbag being a windscreen airbag which, in the inflated state, extends over an outer side of a windscreen.

## Revendications

1. Coussin gonflable de sécurité de véhicule automobile, comprenant une valve de sortie de gaz (1) et une couche de coussin gonflable de sécurité (3) dans laquelle est formée au moins une ouverture de purge d'air (51, 52, 53), une lame de valve (7) qui ferme l'ouverture de purge d'air (51, 52, 53), laquelle est constituée d'un matériau souple et est disposée au-dessus de l'ouverture de purge d'air (51, 52, 53) de manière à pouvoir coulisser parallèlement à la couche de coussin gonflable de sécurité (3) dans une direction (x) prédéfinie, ainsi qu'un guide de lame de valve (9), qui chevauche la lame de valve (7) au niveau des bords de la lame de valve (7) et qui possède une ouverture de guidage (91) au centre, un chevauchement (a) dans la direction (x) prédéfinie du guide de lame de valve (9) et de la lame de valve (7) étant configuré de telle sorte et l'ouverture de purge d'air (51, 52, 53) étant disposée de telle sorte que la lame de valve (7) peut être repoussée vers l'extérieur à travers l'ouverture de guidage (91) déjà après une courte course de coulissement en raison d'une pression de gaz à l'intérieur du coussin gonflable de sécurité de véhicule automobile et l'ouverture de purge d'air (51, 52, 53) est ainsi libérée, **caractérisé en ce que**
au moins un bord d'ouverture de guidage (92, 93) latéral dans la direction (x) prédéfinie suit un tracé en biais par rapport à la direction (x) prédéfinie de telle sorte qu'un coulissement de la lame de valve (7) met fin à un chevauchement avec le bord d'ouverture de guidage latéral (92, 93) après la courte course de coulissement.

2. Coussin gonflable de sécurité de véhicule automobile selon la revendication 1, un bord latéral (72, 73) de la lame de valve (7) suivant un tracé parallèle au bord d'ouverture de guidage latéral (92, 93) sensiblement décalé d'une amplitude de chevauchement (a) dans la direction (x) prédéfinie.

3. Coussin gonflable de sécurité de véhicule automobile selon la revendication 1 ou 2, un bord d'ouverture de guidage avant (94) de l'ouverture de guidage (91) dans la direction (x) prédéfinie suivant un tracé sensiblement transversal par rapport à la direction (x) prédéfinie.

4. Coussin gonflable de sécurité de véhicule automobile selon l'une des revendications 1 à 3, un autre bord d'ouverture de guidage latéral (93) étant de configuration sensiblement symétrique en miroir par rapport au bord d'ouverture de guidage latéral (92) et la ligne de symétrie en miroir suivant un tracé dans la direction (x) prédéfinie.

5. Coussin gonflable de sécurité de véhicule automobile selon l'une des revendications 1 à 4, l'ouverture de purge d'air (51, 52, 53) étant formée dans la zone d'une extrémité arrière dans la direction (x) prédéfinie du bord d'ouverture de guidage latéral (92, 93).

6. Coussin gonflable de sécurité de véhicule automobile selon l'une des revendications 1 à 5, l'ouverture de guidage (91) étant réalisée sous la forme d'un triangle isocèle ou d'un trapèze équilatéral.

7. Coussin gonflable de sécurité de véhicule automobile selon la revendication 6, la lame de valve (7) étant réalisée sous la forme d'un trapèze et une languette de prolongation (75) étant formée au niveau du côté court du trapèze et acheminée dans le guide de lame de valve (9) .

8. Coussin gonflable de sécurité de véhicule automobile selon l'une des revendications 1 à 7, l'ouverture de purge d'air (51, 52, 53) étant formée à proximité d'un bord d'ouverture de guidage (92, 93, 94) et en particulier plusieurs ouvertures de purge d'air étant formées, lesquelles sont formées à proximité des bords d'ouverture de guidage (92, 93, 94) et en dehors d'un centre de l'ouverture de guidage (91).

9. Coussin gonflable de sécurité de véhicule automobile selon l'une des revendications 1 à 8, la lame de valve (7) étant calée, notamment cousue, à la couche de coussin gonflable de sécurité (3) au niveau de son extrémité avant dans la direction (x) prédéfinie.

10. Coussin gonflable de sécurité de véhicule automobile selon l'une des revendications 1 à 9, le guide de lame de valve (9) étant réalisé sous la forme d'une poche posée, qui est notamment cousue sur la couche de coussin gonflable de sécurité (3).

11. Coussin gonflable de sécurité de véhicule automobile selon l'une des revendications 1 à 10, le coussin gonflable de sécurité de véhicule automobile étant un coussin gonflable de sécurité de pare-brise qui, à l'état gonflé, s'étend au-dessus d'un côté extérieur d'un pare-brise.
